# EUROPEAN PATENT SPECIFICATION

(11) **EP 4 050 924 B1**
(45) Date of publication and mention of the grant of the patent: **24.09.2025**
(21) Application number: 21159110.2
(22) Date of filing: 24.02.2021
(51) Int. Cl.: H04W 12/08, B60R 25/24, H04W 4/40, B60R 25/00, H04W 88/04

(54) **COMPUTER PROGRAM, SERVER, COMMUNICATION CIRCUIT, VEHICLE, MOBILE COMMUNICATIONS DEVICE, AND METHODS FOR A SERVER, A COMMUNICATION CIRCUIT, AND A MOBILE COMMUNICATIONS DEVICE**
COMPUTERPROGRAMM, SERVER, KOMMUNIKATIONSSCHALTUNG, FAHRZEUG, MOBILKOMMUNIKATIONSVORRICHTUNG UND VERFAHREN FÜR EINEN SERVER, KOMMUNIKATIONSSCHALTUNG UND MOBILKOMMUNIKATIONSVORRICHTUNG
PROGRAMME INFORMATIQUE, SERVEUR, CIRCUIT DE COMMUNICATION, VÉHICULE, DISPOSITIF DE COMMUNICATION MOBILE ET PROCÉDÉS POUR UN SERVEUR, CIRCUIT DE COMMUNICATION ET APPAREIL DE COMMUNICATION MOBILE

(43) Date of publication of application: 31.08.2022
(73) Proprietor: Volkswagen Aktiengesellschaft, 38440 Wolfsburg (DE)
(72) Inventor: Jornod, Guillaume, 10245 Berlin (DE); Pfadler, Andreas, 13357 Berlin (DE); Schönauer, Moritz, 10247 Berlin (DE)

(56) References cited:
- US-A1- 2015 161 832
- US-A1- 2019 366 979
- US-A1- 2020 094 779
- US-A1- 2020 205 062
- US-B1- 10 919 490
- "3rd Generation Partnership Project; Technical Specification Group Services and System Aspects; Study on security aspects of enhancement for proximity based services in the 5G System (5GS) (Release 17)", vol. SA WG3, no. V0.4.0, 8 February 2021 (2021-02-08), pages 1 - 106, XP051999407, Retrieved from the Internet <URL:https://ftp.3gpp.org/Specs/archive/33_series/33.847/33847-040.zip 33847-040.docx> [retrieved on 20210208]
- QUALCOMM INCORPORATED: "New SID: Study on vehicle-mounted relays", vol. SA WG1, no. E-meeting; 20200824 - 20200902, 7 September 2020 (2020-09-07), XP051932128, Retrieved from the Internet <URL:https://ftp.3gpp.org/tsg_sa/WG1_Serv/TSGS1_91e_ElectronicMeeting/Docs_rev_numb/S1-203155r3.zip S1-203155_Vehicle Relays SID_rev3.doc> [retrieved on 20200907]
- QUALCOMM INCORPORATED: "Use case on service continuity during mobility between macro and mobile relay - user entering/leaving vehicle", vol. SA WG1, no. Electronic Meeting; 20201110 - 20201119, 3 November 2020 (2020-11-03), XP051950558, Retrieved from the Internet <URL:https://ftp.3gpp.org/tsg_sa/WG1_Serv/TSGS1_92_Electronic_Meeting/Docs/S1-204237.zip S1-204237_FS_VMR_use_case_mobility_between_macro_and_relay, user entering-leaving.doc> [retrieved on 20201103]

## Description

The present invention relates to a computer program, a server, a communication circuit, a vehicle, a mobile communications device, and methods for a server, a communication circuit, and a mobile communications device. In particular, embodiments of the present invention relate to a concept for communication between a mobile communications device, a vehicle, and a server.

Systems for car sharing or vehicle rental play an increasingly important role in mobility concepts. In car sharing, a user might book a vehicle using his or her mobile communications device and use a virtual key which is emulated on the mobile communications device to lock and/or unlock the vehicle. The vehicles can be booked for short or even long trips (up to days). In the latter case the user might drive to areas with poor or even no mobile internet/network coverage. In order to lock or unlock the vehicle, both the user and the vehicle may require a sufficient connection to a backend, e.g., via a cellular network. This, however, implies that the vehicle can only be parked, locked, and unlocked in areas where network coverage is provided. Also, the network coverage might fluctuate over time. Such fluctuations particularly occur at a cell edges of the cellular network and, e.g., due to changing weather conditions. Thus, the user might be able to lock the vehicle and might not be able to unlock the vehicle at a later time due to such fluctuations.

Document "3rd Generation Partnership Project; Technical Specification Group Services and System Aspects; Study on security aspects of enhancement for proximity based services in the 5G System (5GS) (Release 17)" relates to a study on security aspects of enhancement for proximity based services in the 5G system (5GS). The document, in particular, deals with a concept of discovery of separate UEs and relaying communication from a remote UE for proximity-based services.

US10919490B1 discusses a computer-implemented method that involves determining the status of an initial connection attempt between a mobile device with a Phone-as-a-Key (PaaK) controller and the first Bluetooth Low-Energy (BLE) module in a target vehicle. Based on this connection status, the mobile device selects a relay vehicle linked to both the PaaK controller and the target vehicle. This relay vehicle contains a second BLE module. The mobile device then establishes a second connection with the relay vehicle's BLE module and sends a power mode command to the target vehicle through this second connection. The second BLE module of the relay vehicle then forwards the power mode command to the target vehicle, allowing it to perform a key-on operation.

US 2019/366979 A1 discusses the management of a vehicle by a management server. This server comprises two main components: a receiving unit, which is designed to accept a vehicle usage request from a renter's user terminal, and a sending unit, which is responsible for transmitting a virtual key to the user terminal. This virtual key allows the renter to unlock the vehicle door and gain access to the vehicle while restricting access to certain other functionalities of the vehicle.

US 2020/094779 A1 discusses a control system for a vehicle shared by multiple users. The system evaluates requests to unlock the vehicle's doors by examining certain conditions. It checks whether there is another scheduled usage period following a completed usage period and whether a specific end procedure has been carried out. Additionally, it considers whether the doors were unlocked without using an electronic key during the time between the conclusion of the previous usage procedure and the current request. Based on this information, the system decides whether or not to grant access for unlocking the doors.

Document US 9 373 201 B2 discloses a rental/car-share (RCS) vehicle access and management system and method which utilizes barcodes, QR codes, NFC, RFID, GPS, and a mobile app coupled with a wireless network to enable customers to bypass a reservation desk, pick up, and drop off reserved RCS vehicles using a mobile phone, tablet, or laptop. In order to pick up or drop off RCS vehicles, it is proposed that a mobile device sends a vehicle identifier and customer identifier to a remote server via a cellular network and the internet. So, the remote server can verify the customer by the customer identifier and the vehicle identifier and unlocks an RCS vehicle if the customer is verified successfully.

Document US 9 499 128 B2 discloses techniques for performing an automated pickup of a rental vehicle, an automated return administration, for permitting customer to select a particular rental vehicle, and for permitting a customer to "keylessly" start a rental vehicle using a mobile device. In order to enable the customer to access the rental vehicle, it is suggested that a purchaser computer system accesses a reservation management system via a network to trigger a rental computer system running the reservation management system to provide authorization information to the rental vehicle. So, the vehicle can verify whether the customer is entitled to access the rental vehicle.

The concepts of the above documents require that the mobile device used for accessing the vehicle has connection to a network, i.e. that the mobile device is located within an area with network coverage. Accordingly, those concepts may not work out when the mobile device is out of network coverage.

Document US 7 106 171 B1 discloses a wireless remote-control transmitter for entering an identification code to authorize a user to access a vehicle and a keyless entry system with an additional keypad-operated transmitter mounted to the vehicle. For accessing the vehicle, this document proposes to transmit commands directly to the vehicle to instruct the vehicle to lock or unlock its doors. The document is silent about authorization of the user by a backend. Thus, the concept of this document is inappropriate for, e.g., rental car services where further authorization by a backend may be desired.

Hence, there may be a demand for an improved concept for communication between a server for a vehicle and a mobile communications device.

This demand may be satisfied by the subject-matter of the appended independent and dependent claims.

Embodiments of the present disclosure are based on the finding that vehicles, in particular vehicles for car sharing and rental cars, exhibit more performant hardware and/or access to more mobile network operators (MNOs) for communicating with a (backend) server controlling access to the vehicle than mobile communications devices of users do. Hence, for the vehicles, a network coverage of networks for communication with a backend server may be larger than for the mobile communications devices. So, in respect to the above finding, the basic idea of the concept proposed herein is to relay information for communication between a mobile communication device and the server by the vehicle, e.g., to enable communication between the mobile communications device and the server where the mobile communications device is out of network coverage.

Embodiments provide a method for a server and for configuring temporal access to a vehicle for a user. The method comprises receiving information on a mobile communications device of the user together with a request for temporal access to the vehicle. Also, the method comprises assigning a dedicated common identifier to the vehicle and the mobile communications device based on the information on the mobile communications device. Further, the method comprises communicating the dedicated common identifier to the mobile communications device and to the vehicle. The method further comprises causing the vehicle to relay information comprising the dedicated common identifier between the server and the mobile communications device. This may enable communication between the mobile communications device and the server via the vehicle particularly when the mobile communications device is out of network coverage of a local or mobile communications network.

The information comprising the dedicated common identifier may comprise a locking/unlocking request from the mobile communications device. In this event, the method may further comprise receiving, via the vehicle, the locking/unlocking request to lock or unlock the vehicle and transmitting, in response to the locking/unlocking request, information for locking or unlocking to the vehicle. In this way, the user is enabled to lock and/or unlock the vehicle, e.g., to access or leave the vehicle. Also, this may enable the server to control access of users to the vehicle. E.g., the server may refuse requests from unregistered/unauthorized users to access the vehicle.

According to some embodiments the method further comprises receiving information on at least one further mobile communications device and assigning the dedicated common identifier to the at least one further mobile communications device. Further, the method may comprise communicating the dedicated common identifier to the at least one further mobile communications device and causing the vehicle to relay information comprising the dedicated common identifier between the server and the at least one further mobile communications device. The multiple mobile communications devices may be controlled by multiple users. In this event, the multiple users are enabled to communicate with the server although the mobile communications device may be out of network coverage. Alternatively, the multiple mobile communications devices are controlled by the same user. In this event, the user is enabled to use any of the multiple mobile communications devices even when it is out of network coverage.

Other embodiments provide a method for a vehicle and for configuring temporal access to the vehicle for a user. The method comprises receiving from a server a dedicated common identifier. Also, the method comprises relaying information comprising the dedicated common identifier between the server and a mobile communications device of the user to which the dedicated common identifier is assigned. This allows communication between the mobile communications device and the server via the vehicle particularly when the mobile communications device is out of network coverage of a local or mobile communications network.

Relaying information optionally comprises communicatively connecting to a further vehicle communicatively coupled to the server and relaying information comprising the dedicated common identifier from the mobile communications device to the server via the further vehicle. This allows the vehicle to relay information between the mobile communications device and the server even when the vehicle is out of network coverage, e.g., of a mobile communications network for communication with the server.

The information comprising the dedicated common identifier may comprise a locking/unlocking request and relaying information may comprise relaying the locking/unlocking request from the mobile communications device to the server to lock or unlock the vehicle. According to some embodiments, the method further comprises receiving information for locking or unlocking the vehicle from the server and locking or unlocking the vehicle based on the information for locking or unlocking the vehicle. In this way, the user can lock and/or unlock the vehicle, e.g., to access or leave the vehicle.

The dedicated common identifier is optionally assigned to at least one further mobile communications device, and wherein relaying the information further comprises relaying the information comprising the dedicated common identifier between the at least one further mobile communications device and the server. The multiple mobile communications devices may be controlled by multiple users. In this event, the multiple users are enabled to communicate with the server although the mobile communications device may be out of network coverage. Alternatively, the multiple mobile communications devices are controlled by the same user. In this event, the user is enabled to use any of the multiple mobile communications devices even when it is out of network coverage.

Other embodiments provide a method for a mobile communications device and for configuring temporal access to a vehicle for a user of the mobile communications device. The method comprises transmitting to a server information on the mobile communications device together with a request for temporal access to the vehicle to assign a dedicated common identifier to the mobile communications device and the vehicle and receiving the dedicated common identifier from the server. Further, the method comprises causing the vehicle to relay information comprising the dedicated common identifier between the server and the mobile communications device. This allows communication between the mobile communications device and the server via the vehicle particularly when the mobile communications device is out of network coverage of a local or mobile communications network.

The information comprising the dedicated common identifier may comprise a locking/unlocking request. Then, causing the vehicle to relay information may comprise causing the vehicle to relay the locking/unlocking request to the server to lock or unlock the vehicle. In this way, the user can lock and/or unlock the vehicle, e.g., to access or leave the vehicle.

Further embodiments pertain to a computer program having a program code for performing at least one of the methods of the preceding claims, when the computer program is executed on a computer, a processor, or a programmable hardware component.

Other embodiments provide a server comprising one or more interfaces for communication and a data processing circuit configured to control the one or more interfaces. The data processing circuit and the one or more interfaces are configured to execute one of the methods for a server.

Further embodiments provide a communication circuit for a vehicle. The communication circuit comprises one or more interfaces for communication and a data processing circuit configured to control the one or more interfaces. The data processing circuit and the one or more interfaces are configured to execute one of the methods for a vehicle.

Other embodiments provide a vehicle comprising the communication circuit proposed herein.

Further embodiments provide a mobile communications device comprising one or more interfaces for communication and a data processing circuit configured to control the one or more interfaces. The data processing circuit and the one or more interfaces are configured to execute one of the methods for the mobile communications device.

Some other features or aspects will be described using the following non-limiting embodiments of apparatuses or methods or computer programs or computer program products by way of example only, and with reference to the accompanying figures, in which:
Fig. 1 illustrates a flowchart of an embodiment of a method for a server;
Fig. 2 illustrates a flowchart of an embodiment of a method for a vehicle;
Fig. 3 illustrates a flowchart of an embodiment of a method for a mobile communications device;
Fig. 4 illustrates a block diagram schematically illustrating an embodiment of an apparatus for implementation of the proposed concept; and
Fig. 5a and 5b schematically illustrate a use case of the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In existing concepts for car sharing or car rental, a vehicle may be parked somewhere, where no stable connection from a user device to a backend server can be assured. It may happen that the user is able to lock the vehicle where the user, e.g., parks the vehicle but due to fluctuations of network coverage, the user may not be able to access a mobile communications network and connect to the backend server to unlock it anymore. Also, the user may not be able to lock the vehicle in the first place to leave the vehicle.

Hence, there may be a demand for an improved concept for communication between a (backend) server for a vehicle and a mobile communications device.

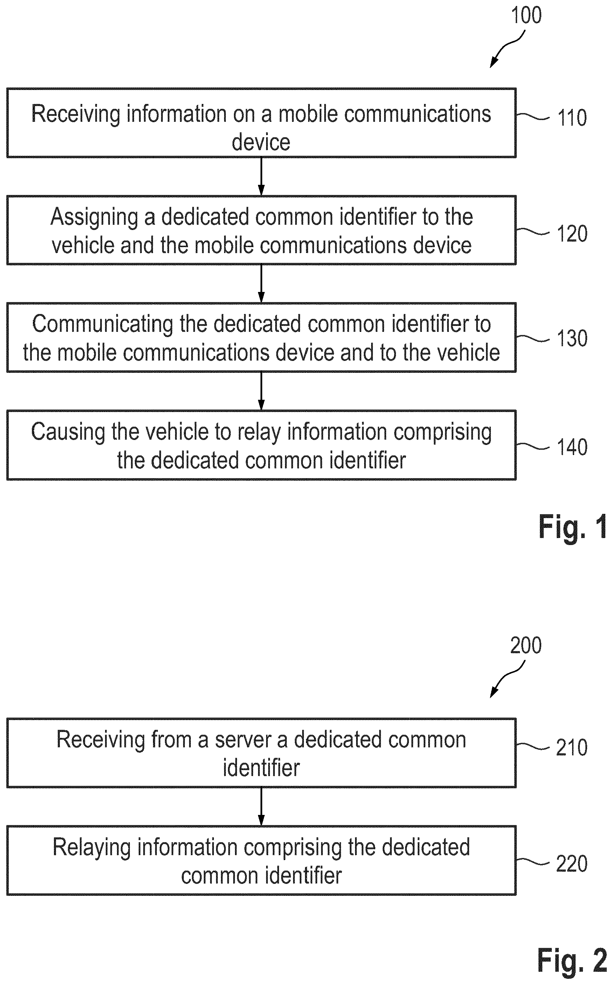

Fig. 1 illustrates a flowchart of an embodiment of a method 100 for a server and for configuring temporal access to a vehicle. The server, e.g., is communicatively coupled to the vehicle over a mobile communications network to control some of its functions and/or access to the vehicle. The server can be also understood as a "backend" for the vehicle. Temporal access, e.g., is desired in applications for car sharing and car rental where a user is granted temporal access to the vehicle for a certain (rental) period. Temporal access may be also desired for individually owned vehicles, i.e. vehicles owned by a consumer.

As can be seen from the flow chart, method 100 comprises receiving 110 information on a mobile communications device of the user together with a request for temporal access to the vehicle. This, e.g., happens when the user registers for temporal access to the vehicle or books the vehicle through communication with the server. In particular, this may happen when or while the mobile communications device is in network coverage of a local and/or mobile communications network. Hence, the server may receive the information on a mobile communications device and the request via the local and/or mobile communications network. The information on the mobile communications device may comprise an identifier or other information on the mobile communications device and/or the user by which the mobile communications device can be distinguished from others.

Further, method 100 comprises assigning 120 a dedicated common identifier to the vehicle and the mobile communications device based on the information on the mobile communications device. This, e.g., allows the server to trace back and address information to the mobile communications device using the dedicated common identifier, as stated in more detail later. For assigning the dedicated common identifier, the information on the mobile communications device as well as information on the vehicle may be linked and/or stored together with the dedicated common identifier in a database of the server to address information.

Also, method 100 comprises communicating 130 the dedicated common identifier to the mobile communications device and to the vehicle. This allows the mobile communications device to provide information comprising the dedicated common identifier and allows the vehicle to detect such information comprising the dedicated common identifier.

Further, method 100 comprises causing 140 the vehicle to relay information comprising the dedicated common identifier between the server and the mobile communications device. For causing 140, the vehicle to relay information comprising the dedicated common identifier, the server, e.g., configures, instructs, and/or programs the vehicle to relay said information through communication with the vehicle. For communication with the server and the mobile communications device, the vehicle, e.g., comprises one or more (dedicated) communication circuits. In particular, the vehicle may exhibit more performant communications hardware and/or access to mobile communications networks of multiple mobile network operators (MNOs) and, thus, benefit from a larger network coverage than the mobile communications device. The vehicle, e.g., exhibits a larger number and/or more performant transceiver circuits, antennas for communication, and/or subscriber identity modules for access to mobile communication networks than the mobile communications device. This enables the vehicle to relay information comprising the dedicated common identifier between the server and the mobile communications device (even) where the mobile communications device is out of network coverage for direct access to a local or mobile communications network for communication with the server. Hence, the dedicated common identifier allows the mobile communications device and the server to address information to the server or the mobile communications device, respectively. So, method 100, e.g., enables the server to receive information from the mobile communications device and/or transmit information to the mobile communications device even when the mobile communications device is out of network coverage by adding the dedicated common identifier to the information to be communicated. In turn, method 100 enables the mobile communications device to receive information from the server and transmit information to the server when the mobile communications device is out of network coverage by adding the dedicated common identifier to the information to be communicated.

Method 100 can be applied to control access of the user to the vehicle. To this end, the information comprising the dedicated common identifier, e.g., comprises a locking/unlocking request from the mobile communications device and method 100 further comprises receiving, via the vehicle, the locking/unlocking request to lock or unlock the vehicle. Also, method 100 may comprise transmitting, in response to the locking/unlocking request, information for locking or unlocking to the vehicle. The locking/unlocking request, e.g., comprises a request for locking or unlocking one or multiple locks of the vehicle. In particular, the locking/unlocking request may comprise a request for locking or unlocking one, some, or all doors, a trunk, a hood, and/or a fuel tank cap of the vehicle. The server, e.g., verifies based on the locking/unlocking request whether the user is authorized to lock and/or unlock the vehicle and transmits the information for locking or unlocking to the vehicle to the vehicle if the user is authorized. The information for locking or unlocking the vehicle, e.g., comprises a command for the vehicle to lock or unlock the vehicle. Otherwise, if the user is not authorized, the server may not transmit such a command.

Optionally, method 100 is applied communicate with the server for other reasons (e.g. to make a new booking or to end a current booking) and/or to control one or more various other functions of the vehicle using the mobile communications device. For this, the information comprising the dedicated common identifier may comprise a request to register for the new booking, to end the current booking, and/or to perform one or more other functions of the vehicle, e.g., to sound the vehicle's horn, to open a top of the vehicle, and/or the like.

Method 100 may be also applied to multiple mobile communications devices. For this, method 100, e.g., comprises receiving information on at least one further mobile communications device and assigning the dedicated common identifier to the at least one further mobile communications device to enable the server to trace back and address information to the mobile communications device using the dedicated common identifier. Also, method 100 may comprise communicating the dedicated common identifier to the at least one further mobile communications device to enable the one or more further mobile communications device to add the dedicated common identifier to information and causing the vehicle to relay information comprising the dedicated common identifier between the server and the at least one further mobile communications device. The user or multiple users, e.g., register with the server with the one or more further mobile communications devices, thereby providing the information on the one or more further mobile communications devices to the server. The information on the one or more further mobile communications devices may comprise identifiers or other information on the one or more further mobile communications device and/or the users by which the one or more further mobile communications devices can be distinguished from others. In order to assign the dedicated common identifier to the one or more further mobile communications devices, the information on the one or more further mobile communications devices may be linked and/or stored together with the dedicated common identifier in the database of the server. So, the server can also transmit information to the one or more further mobile communications device even when they are out of network coverage, e.g., to enable multiple users to communicate with the server or to enable one user holding the mobile communications device and the one or more further mobile communications device to use multiple mobile communications devices for communication with the server.

For implementing the concept proposed herein, e.g., multicast or multicast communication is applied. In this event, the dedicated common identifier, e.g., is a multicast address of the vehicle and the mobile communications device and, optionally, one or more further mobile communications devices. In line with the proposed concept, the server and the mobile communications device and, optionally, the one or more further mobile communications device can use the multicast address to address information to the server and mobile communications device, respectively, by adding the multicast address to the information in order to make the vehicle relay the information between the mobile communications device and the serber. The multicast address, e.g., is an Internet Protocol Version 4 (IPv4) multicast address or an Internet Protocol Version 6 (IPv6) multicast address.

The concept proposed herein may be also implemented in a (respective) method for a vehicle complementary to method 100.

Fig. 2 illustrates a flowchart of an embodiment of a method 200 for a vehicle and for configuring temporal access for a user.

Method 200 comprises receiving 210 from a server a dedicated common identifier and relaying 220 information comprising the dedicated common identifier between the server and a mobile communications device of the user to which the dedicated common identifier is assigned. As described in more detail in connection with method 100, this may allow communication between the server and the mobile communications device (even) when the mobile communications device is out of network coverage. In some applications, method 200 is implemented together with method 100.

According to what is explained with connection with method 100, the information comprising the dedicated common identifier optionally comprises a locking/unlocking request and relaying 220 information comprises relaying the locking/unlocking request from the mobile communications device to the server to lock or unlock the vehicle to enable the user to lock or unlock the vehicle using the mobile communications device even when the mobile communications device is out of coverage.

Accordingly, method 200 may further comprise receiving information for locking or unlocking the vehicle from the server and locking or unlocking the vehicle based on the information for locking or unlocking the vehicle.

As mentioned in connection with method 100, method 200 is optionally applied to communicate with the server for other reasons (e.g. to make a new booking or to end a current booking) and/or to control one or more various other functions of the vehicle using the mobile communications device. To this end, the information comprising the dedicated common identifier is adapted accordingly.

Relaying 220 the information optionally comprises communicatively connecting to a further vehicle communicatively coupled to the server and relaying the information comprising the dedicated common identifier from the mobile communications device to the server via the further vehicle. In this way, the vehicle is enabled to relay information between the mobile communications device and the server if the vehicle itself is out of network coverage and unable to directly access a mobile or local communications network to communicatively connect to the server. For communicatively connecting to the further vehicle, the vehicle, e.g., uses technology for device-to-device (D2D) communication or vehicle-to-vehicle (V2V) communication. To this end, the vehicle, e.g., uses technology in accordance with a standard of the Institute of Electrical and Electronics Engineers (IEEE), e.g. an IEEE 802.11 standard, or with a standard of the 3^{rd} Generation Partnership Project (3GPP), e.g. 2G, 2.5G, 3G, 4G, or 5G standard.

Further optionally, the dedicated common identifier is assigned to at least one further mobile communications device and relaying 220 the information further comprises relaying the information comprising the dedicated common identifier between the at least one further mobile communications device and the server to enable communication between the server and multiple mobile communications device in the above described manner.

For further explanations of aspects and features of method 200, it is referred to explanations in connection with other methods (e.g. method 100) proposed herein.

Method 100 and/or method 200 may be also implemented in combination with a method for a mobile communications device.

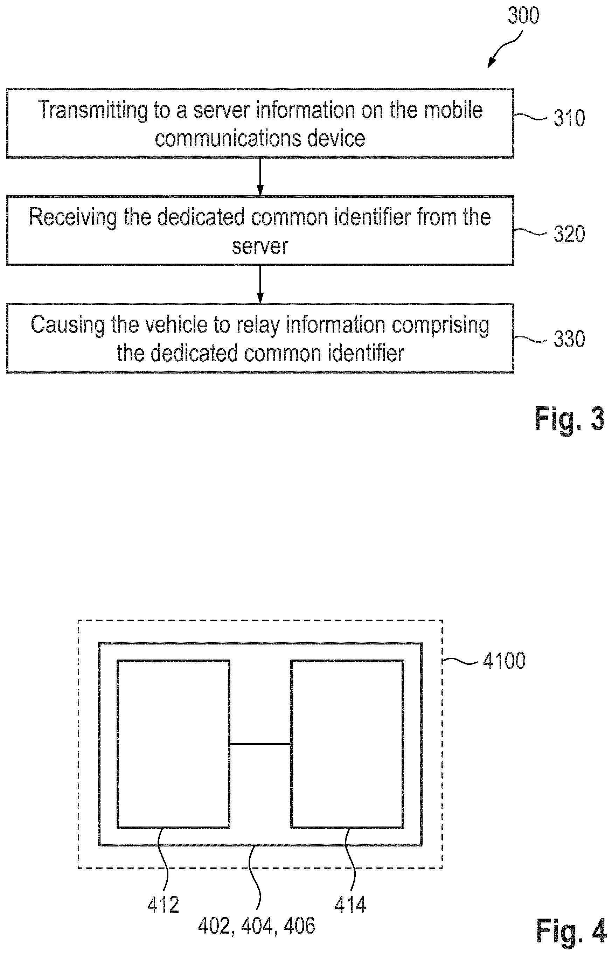

Fig. 3 illustrates a flowchart of an embodiment of a method 300 for a mobile communications device and for configuring temporal access to a vehicle for a user of the mobile communications device. Method 300 comprises transmitting 310 to a server information on the mobile communications device together with a request for temporal access to the vehicle to assign a dedicated common identifier to the mobile communications device and the vehicle. Also, method 300 comprises receiving 320 the dedicated common identifier from the server and causing 330 the vehicle to relay information comprising the dedicated common identifier between the server and the mobile communications device.

In line with what has been described in connection with methods 100 and 22, the information comprising the dedicated common identifier optionally comprises a locking/unlocking request and causing the vehicle to relay information comprises causing the vehicle to relay the locking/unlocking request to the server to enable the user to lock or unlock the vehicle using the mobile communications device even when the mobile communications device is out of network coverage.

Methods 100, 200, and 300 can be implemented in respective apparatuses.

Fig. 4 illustrates a block diagram schematically illustrating an embodiment of a server 402, a communication circuit 404 for a vehicle, and a mobile communications device 406 for executing method 100, 200, or 300, respectively.

As can be seen from the block diagram, the server 402, the communication circuit 404, and the mobile communications device 406 each comprise one or more interfaces 412 for communication; and a data processing circuit 414 configured to control the one or more interfaces 412. Further, the data processing circuit 414 and the one or more interfaces 412 are configured to execute method 100, 200, or 300, respectively.

In embodiments the one or more interfaces 412 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 412 may comprise further components to enable according communication between the mobile communications device 406, the vehicle 404, and the server 402, such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 412 may be coupled to one or more antennas, which may correspond to any transmit and/or receive antennas, such as horn antennas, dipole antennas, patch antennas, sector antennas etc. The antennas may be arranged in a defined geometrical setting, such as a uniform array, a linear array, a circular array, a triangular array, a uniform field antenna, a field array, combinations thereof, etc. In some examples the one or more interfaces 412 may serve the purpose of transmitting or receiving or both, transmitting and receiving, information according to method 100, 200, or 300, respectively.

As shown in Fig. 4 the respective one or more interfaces 412 are coupled to the respective data processing circuit 414 of the server 402, the communication circuit, or the mobile communications device, respectively. In embodiments the data processing circuit 414 may comprise any means for processing information according to method 100, 200, or 300, respectively. The data processing circuit may be implemented using one or more processing units, one or more processing devices, any means for processing, such as a processor, a computer or a programmable hardware component being operable with accordingly adapted software. In other words, the described functions of the data processing circuit 414 may as well be implemented in software, which is then executed on one or more programmable hardware components. Such hardware components may comprise a general-purpose processor, a Digital Signal Processor (DSP), a micro-controller, etc.

As indicated by dashed lines in Fig. 4, the communication circuit 4100 may be implemented in a vehicle 4100.

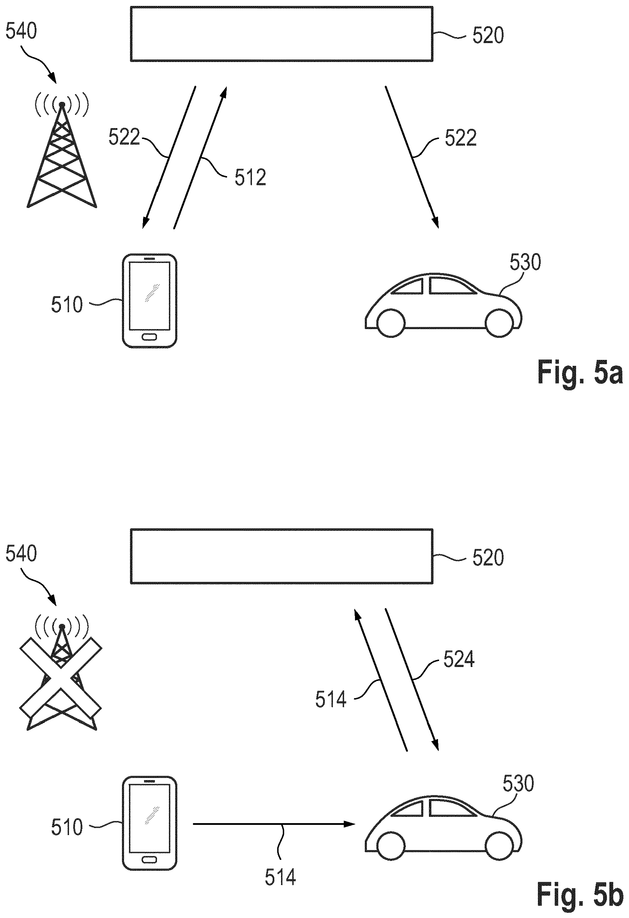

In some use cases, the server 402, the vehicle 404, and the mobile communications device 406 interact according to the proposed concept which is stated in more detail by reference to Fig. 5a and Fig. 5b schematically illustrating an exemplary use case.

The use case, e.g., relates to car sharing or car rental where it is envisaged that a user has temporal access to a vehicle 530. In order to book vehicle 530, one or more mobile communications devices 510 are registered with a (backend) server 520 which manages vehicle 530 using one or more of the mobile communications devices 510. In this way, the user may initiate a car sharing session where the user is allowed to use vehicle 530. In order to book vehicle 530 and register with server 520, one or more of the mobile communications devices 510 may "directly" access a cellular/mobile communications network 540 to communicate with server 520 via the communications network 540.

According to a basic principle of the proposed concept, it is envisaged to relay communication between one or more of the mobile communications devices 510 and server 520 by vehicle 530. One way to implement this is to establish a groupcast/multicast group including vehicle 530 and the mobile communications devices 510 and configure vehicle 530 to relay communication between the mobile communications devices 510 and server 520. Thus, vehicle 530 relays information related to actions during the car sharing session, such as parking, locking, and/or unlocking, between the mobile communications devices 510 and server 520 based on the concept of groupcast/multicast communication.

Steps for implementing the proposed concept optionally comprise the following:
1. The user accesses the cellular/mobile communications network 540 and communicates with server 520 using one or more of the mobile communications devices to book vehicle 530.
2. The user registers the one or more mobile communications devices for further out of coverage communications. In order to book vehicle 530 and register the one or more mobile communications devices 510, the user transmits information 512 on the one or more mobile communications devices 510 together with a request for temporal access.
3. Server 520 assigns a multicast address 522 to the registered mobile communications devices 510 and vehicle 530 to establish a multicast group including the mobile communications devices 510 and vehicle 530.
4. Server 520 stores the multicast address 522 in a database to avoid that the same multicast address 522 is used for another multicast group, provides the multicast address 522 to the mobile communications devices 510 to enable them to add the multicast address 522 to information and provides the multicast address to the vehicle 530 to configure vehicle 530 to relay information comprising the multicast address between the mobile communications devices 510 and server 530.
5. The user can then, e.g., lock and unlock vehicle 530 using any of the mobile communications devices 510 through groupcast/multicast communications using the multicast address. The user, e.g., communicates a locking/unlocking request 514 to server 520 via vehicle 530 by adding the multicast address 522 to the locking/unlocking request 514. Server 520 can then transmit a command 524 to vehicle 530 to instruct vehicle 530 to lock or unlock.
6. In order to terminate the booking, server 520, e.g., dissolves the multicast group and deletes the multicast address 522 from the database.

As mentioned above, the proposed concept particularly enables communication between the mobile communications devices 510 and server 520 when one, some, or all of the mobile communications devices 510 are out of network coverage which, e.g., happens when the user is or moves out of network coverage, e.g., when the user parks or picks up vehicle 530 anywhere out of network coverage.

It is noted that although the explanations are made with reference to car sharing or car rental, the explained concept can be also used in other applications where one mobile communications devices communicate with a server.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions. Moreover, all statements herein reciting principles, aspects, and embodiments of the invention, as well as specific examples thereof, are intended to encompass equivalents thereof.

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the detailed description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

### Reference list

- 100: method for a server
- 110: receiving information on a mobile communications device
- 120: assigning a dedicated common identifier
- 130: communicating the dedicated common identifier
- 140: causing the vehicle to relay information
- 200: method for a vehicle
- 210: receiving from a server a dedicated common identifier
- 220: relaying information comprising the dedicated common identifier
- 300: method for a mobile communications device
- 310: transmitting to a server information on the mobile communications device
- 320: receiving the dedicated common identifier from the server
- 330: causing the vehicle to relay information comprising the dedicated common identifier
- 402: server
- 404: communication circuit for a vehicle
- 406: mobile communications device
- 412: one or more interfaces
- 414: data processing circuit
- 4100: vehicle
- 510: one or more mobile communications devices
- 512: information on the one or more mobile communications devices
- 514: locking/unlocking request
- 520: server
- 522: multicast address
- 524: command
- 530: vehicle
- 540: cellular/mobile communications network

## Claims

1. A method (100) for configuring temporal access to a vehicle for a user, executed by a server, the method (100) comprising:
receiving (110), from the mobile communications device, information on the mobile communications device of the user together with a request for temporal access to the vehicle;
assigning (120) a dedicated common identifier to the vehicle and the mobile communications device based on the information on the mobile communications device;
establishing a groupcast or multicast group comprising the vehicle and the mobile communications device, with the groupcast or multicast group being addressed by the dedicated common identifier;
storing the dedicated common identifier in a database of the server to avoid the dedicated common identifier being used for another groupcast or multicast group;
communicating (130) the dedicated common identifier to the mobile communications device and to the vehicle;
causing (140), by instructing the vehicle, the vehicle to relay information comprising the dedicated common identifier between the server and the mobile communications device, so that the mobile communication device and the server are able to communicate via the vehicle by addressing the respective other party using the dedicated common identifier, wherein the information comprising the dedicated common identifier comprises a locking/unlocking request from the mobile communications device;
receiving, via the vehicle, the locking/unlocking request to lock or unlock at least one of one door, some doors, all doors, a trunk, a hood, and a fuel tank cap of the vehicle, and transmitting, in response to the locking/unlocking request, information for locking or unlocking to the vehicle; and
dissolving the groupcast or multicast group after temporal access to the vehicle has ended and removing the dedicated common identifier from the database.

2. The method (100) of claim 1, wherein the method (100) further comprises:
receiving information on at least one further mobile communications device;
assigning the dedicated common identifier to the at least one further mobile communications device;
communicating the dedicated common identifier to the at least one further mobile communications device; and
causing the vehicle to relay information comprising the dedicated common identifier between the server and the at least one further mobile communications device.

3. A method (200) for configuring temporal access to a vehicle for a user, executed by the vehicle, the method (200) comprising:
receiving (210) from a server a dedicated common identifier, the dedicated common identifier being used to address a groupcast or multicast group comprising the vehicle and a mobile communications device of the user and relaying (220) information comprising the dedicated common identifier between the server and the mobile communications device of the user to which the dedicated common identifier is assigned, so that the mobile communication device and the server are able to communicate via the vehicle by addressing the respective other party using the dedicated common identifier,
wherein the information comprising the dedicated common identifier comprises a locking/unlocking request, and wherein relaying (220) information comprises relaying the locking/unlocking request from the mobile communications device to the server to lock or unlock the vehicle;
receiving information for locking or unlocking the vehicle from the server; and
locking or unlocking at least one of one door, some doors, all doors, a trunk, a hood, and a fuel tank cap of the vehicle based on the information for locking or unlocking the vehicle.

4. The method (200) of claim 3, wherein relaying (220) information comprises:
communicatively connecting to a further vehicle communicatively coupled to the server;
relaying information comprising the dedicated common identifier from the mobile communications device to the server via the further vehicle.

5. The method (200) of any one of the claims 3 and 4, wherein the dedicated common identifier is assigned to at least one further mobile communications device, and wherein relaying (220) the information further comprises relaying the information comprising the dedicated common identifier between the at least one further mobile communications device and the server.

6. A method (300) for configuring temporal access to a vehicle for a user of a mobile communications device, executed by the mobile communications device, the method (300) comprising:
transmitting (310) to a server information on the mobile communications device together with a request for temporal access to the vehicle to assign a dedicated common identifier to the mobile communications device and the vehicle;
receiving (320) the dedicated common identifier from the server, the dedicated common identifier being used to address a groupcast or multicast group comprising the vehicle and the mobile communications device; and
causing (330) the vehicle to relay information comprising the dedicated common identifier between the server and the mobile communications device, by using the dedicated common identifier to address the server,
wherein the information comprising the dedicated common identifier comprises a locking/unlocking request, and wherein causing (330) the vehicle to relay information comprises causing the vehicle to relay the locking/unlocking request to the server to lock or unlock at least one of one door, some doors, all doors, a trunk, a hood, and a fuel tank cap of the vehicle.

7. A computer program having a program code for performing one of the methods of the preceding claims, when the computer program is executed on a computer, a processor, or a programmable hardware component.

8. A server (402) comprising:
one or more interfaces (412) for communication; and
a data processing circuit (414) configured to control the one or more interfaces (412), wherein the data processing circuit (414) and the one or more interfaces (412) are configured to execute one of the methods (100) of claims 1 and 2.

9. A communication circuit (404) for a vehicle (4100) comprising:
one or more interfaces (412) for communication; and
a data processing circuit configured (414) to control the one or more interfaces (412), wherein the data processing circuit (414) and the one or more interfaces (412) are configured to execute one of the methods (200) of claims 3 to 5.

10. A vehicle (4100) comprising the communication circuit (404) of claim 9.

11. A mobile communications device (406) comprising:
one or more interfaces (412) for communication; and
a data processing circuit (414) configured to control the one or more interfaces (412), wherein the data processing circuit (414) and the one or more interfaces (412) are configured to execute the methods (300) of claim 6.

## Patentansprüche

1. Verfahren (100) zum Konfigurieren eines zeitlichen Zugangs zu einem Fahrzeug für einen Benutzer, das durch einen Server ausgeführt wird, das Verfahren (100) umfassend:
Empfangen (110), von der mobilen Kommunikationsvorrichtung, von Informationen an der mobilen Kommunikationsvorrichtung des Benutzers zusammen mit einer Anforderung für einen zeitlichen Zugang zu dem Fahrzeug;
Zuweisen (120) einer dedizierten gemeinsamen Kennung für das Fahrzeug und die mobile Kommunikationsvorrichtung basierend auf den Informationen auf der mobilen Kommunikationsvorrichtung;
Einrichten einer Groupcast- oder Multicast-Gruppe, umfassend das Fahrzeug und die mobile Kommunikationsvorrichtung, wobei die Groupcast- oder Multicast-Gruppe durch die dedizierte gemeinsame Kennung adressiert wird;
Speichern der dedizierten gemeinsamen Kennung in einer Datenbank des Servers, um zu verhindern, dass die dedizierte gemeinsame Kennung für eine andere Groupcast- oder Multicast-Gruppe verwendet wird;
Kommunizieren (130) der dedizierten gemeinsamen Kennung an die mobile Kommunikationsvorrichtung und an das Fahrzeug;
Veranlassen (140), durch Anweisen des Fahrzeugs, dass das Fahrzeug Informationen, umfassend die dedizierte gemeinsame Kennung, zwischen dem Server und der mobilen Kommunikationsvorrichtung weiterleitet, so dass die mobile Kommunikationsvorrichtung und der Server fähig sind, über das Fahrzeug zu kommunizieren, durch Adressieren der jeweiligen anderen Partei unter Verwendung der dedizierten gemeinsamen Kennung,
wobei die Informationen, umfassend die dedizierte gemeinsame Kennung, eine Verriegelungs-/Entriegelungsanforderung von der mobilen Kommunikationsvorrichtung umfassen;
Empfangen, über das Fahrzeug, der Verriegelungs-/Entriegelungsanforderung, um mindestens eines von einer Tür, einigen Türen, allen Türen, einem Kofferraum, einer Motorhaube und einem Tankdeckel des Fahrzeugs zu verriegeln oder entriegeln, und Übertragen von Informationen zum Verriegeln oder Entriegeln an das Fahrzeug als Reaktion auf die Verriegelungs-/Entriegelungsanforderung; und
Auflösen der Groupcast- oder der Multicast-Gruppe, nachdem der zeitliche Zugang zu dem Fahrzeug beendet worden ist, und Entfernen der dedizierten gemeinsamen Kennung aus der Datenbank.

2. Verfahren (100) nach Anspruch 1, wobei das Verfahren (100) ferner umfasst:
Empfangen von Informationen an mindestens einer weiteren mobilen Kommunikationsvorrichtung;
Zuweisen der dedizierten gemeinsamen Kennung zu der mindestens einen weiteren mobilen Kommunikationsvorrichtung;
Kommunizieren der dedizierten gemeinsamen Kennung an die mindestens eine weitere mobile Kommunikationsvorrichtung; und
Veranlassen, dass das Fahrzeug Informationen, umfassend die dedizierte gemeinsame Kennung, zwischen dem Server und der mindestens einen weiteren mobilen Kommunikationsvorrichtung weiterleitet.

3. Verfahren (200) zum Konfigurieren des zeitlichen Zugangs zu einem Fahrzeug für einen Benutzer, das durch das Fahrzeug ausgeführt wird, das Verfahren (200) umfassend:
Empfangen (210) einer dedizierten gemeinsamen Kennung von einem Server, wobei die dedizierte gemeinsame Kennung verwendet wird, um eine Groupcast- oder Multicast-Gruppe zu adressieren, umfassend das Fahrzeug und eine mobile Kommunikationsvorrichtung des Benutzers, und
Weiterleiten (220) von Informationen, umfassend die dedizierte gemeinsame Kennung, zwischen dem Server und der mobilen Kommunikationsvorrichtung des Benutzers, dem die dedizierte gemeinsame Kennung zugewiesen ist, so dass die mobile Kommunikationsvorrichtung und der Server fähig sind, über das Fahrzeug zu kommunizieren, durch Adressieren der jeweiligen anderen Partei unter Verwendung der dedizierten gemeinsamen Kennung,
wobei die Informationen, umfassend die dedizierte gemeinsame Kennung, eine Verriegelungs-/Entriegelungsanforderung umfassen und wobei das Weiterleiten (220) von Informationen das Weiterleiten der Verriegelungs-/Entriegelungsanforderung von der mobilen Kommunikationsvorrichtung an den Server umfasst, um das Fahrzeug zu verriegeln oder entriegeln;
Empfangen von Informationen zum Verriegeln oder Entriegeln des Fahrzeugs von dem Server; und
Verriegeln oder Entriegeln von mindestens einem von einer Tür, einigen Türen, allen Türen, einem Kofferraum, einer Motorhaube und einem Tankdeckel des Fahrzeugs basierend auf den Informationen zum Verriegeln oder Entriegeln des Fahrzeugs.

4. Verfahren (200) nach Anspruch 3, wobei das Weiterleiten (220) von Informationen umfasst:
kommunikatives Verbinden mit einem weiteren Fahrzeug, das mit dem Server kommunikativ gekoppelt ist;
Weiterleiten von Informationen, umfassend die dedizierte gemeinsame Kennung, von der mobilen Kommunikationsvorrichtung über das weitere Fahrzeug an den Server.

5. Verfahren (200) nach einem der Ansprüche 3 und 4, wobei die dedizierte gemeinsame Kennung mindestens einer weiteren mobilen Kommunikationsvorrichtung zugewiesen wird und wobei das Weiterleiten (220) der Informationen ferner das Weiterleiten der Informationen, umfassend die dedizierte gemeinsame Kennung, zwischen der mindestens einen weiteren mobilen Kommunikationsvorrichtung und dem Server umfasst.

6. Verfahren (300) zum Konfigurieren eines zeitlichen Zugangs zu einem Fahrzeug für einen Benutzer einer mobilen Kommunikationsvorrichtung, das durch die mobile Kommunikationsvorrichtung ausgeführt wird, das Verfahren (300) umfassend:
Übertragen (310) von Informationen an der mobilen Kommunikationsvorrichtung an einen Server zusammen mit einer Anforderung für einen zeitlichen Zugang zu dem Fahrzeug, um der mobilen Kommunikationsvorrichtung und dem Fahrzeug eine dedizierte gemeinsame Kennung zuzuweisen;
Empfangen (320) der dedizierten gemeinsamen Kennung von dem Server, wobei die dedizierte gemeinsame Kennung verwendet wird, um eine Groupcast- oder Multicast-Gruppe zu adressieren, umfassend das Fahrzeug und die mobile Kommunikationsvorrichtung; und
Veranlassen (330), dass das Fahrzeug Informationen, umfassend die dedizierte gemeinsame Kennung, zwischen dem Server und der mobilen Kommunikationsvorrichtung weiterleitet, durch Verwenden der dedizierten gemeinsamen Kennung, um den Server zu adressieren,
wobei die Informationen, umfassend die dedizierte gemeinsame Kennung, eine Verriegelungs-/Entriegelungsanforderung umfassen, und wobei das Veranlassen (330), dass das Fahrzeug Informationen weiterleitet, das Veranlassen umfasst, dass das Fahrzeug die Verriegelungs-/Entriegelungsanforderung an den Server weiterleitet, um mindestens eines von einer Tür, einigen Türen, allen Türen, einen Kofferraum, einer Motorhaube und einem Tankdeckel des Fahrzeugs zu verriegeln oder entriegeln.

7. Computerprogramm, das einen Programmcode aufweist, zum Durchführen eines der Verfahren nach den vorstehenden Ansprüchen, wenn das Computerprogramm auf einem Computer, einem Prozessor oder einer programmierbaren Hardwarekomponente ausgeführt wird.

8. Server (402), umfassend:
eine oder mehrere Schnittstellen (412) für eine Kommunikation; und
eine Datenverarbeitungsschaltung (414), die konfiguriert ist, um die eine oder die mehreren Schnittstellen (412) zu kontrollieren, wobei die Datenverarbeitungsschaltung (414) und die eine oder die mehreren Schnittstellen (412) konfiguriert sind, um eines der Verfahren (100) nach den Ansprüchen 1 bis 2 auszuführen.

9. Kommunikationsschaltung (404) für ein Fahrzeug (4100), umfassend:
eine oder mehrere Schnittstellen (412) für die Kommunikation; und
eine Datenverarbeitungsschaltung, die konfiguriert (414) ist, um die eine oder die mehreren Schnittstellen (412) zu kontrollieren, wobei die Datenverarbeitungsschaltung (414) und die eine oder die mehreren Schnittstellen (412) konfiguriert sind, um eines der Verfahren (200) nach den Ansprüchen 3 bis 5 auszuführen.

10. Fahrzeug (4100), umfassend die Kommunikationsschaltung (404) nach Anspruch 9.

11. Mobile Kommunikationsvorrichtung (406), umfassend:
eine oder mehrere Schnittstellen (412) für die Kommunikation; und
eine Datenverarbeitungsschaltung (414), die konfiguriert ist, um die eine oder die mehreren Schnittstellen (412) zu kontrollieren, wobei die Datenverarbeitungsschaltung (414) und die eine oder die mehreren Schnittstellen (412) konfiguriert sind, um eines der Verfahren (300) nach Anspruch 6 auszuführen.

## Revendications

1. Procédé (100) permettant de configurer un accès temporel à un véhicule pour un utilisateur, exécuté par un serveur, le procédé (100) comprenant :
la réception (110), à partir du dispositif de communication mobile, d'informations sur le dispositif de communications mobile de l'utilisateur conjointement avec une demande d'accès temporel au véhicule ;
l'attribution (120) d'un identifiant commun dédié au véhicule et au dispositif de communications mobile en fonction des informations sur le dispositif de communications mobile ;
l'établissement d'un groupe de diffusion ou d'un groupe de multidiffusion comprenant le véhicule et le dispositif de communications mobile, le groupe de diffusion ou le groupe de multidiffusion étant adressé par l'identifiant* commun dédié ;
le stockage de l'identifiant commun dédié dans une base de données du serveur afin d'éviter que l'identifiant commun dédié ne soit utilisé pour un autre groupe de diffusion ou un groupe de multidiffusion ;
la communication (130) de l'identifiant commun dédié au dispositif de communications mobile et au véhicule ;
le fait d'amener (140), en donnant des instructions au véhicule, le véhicule à relayer les informations comprenant l'identifiant commun dédié entre le serveur et le dispositif de communications mobile, de sorte que le dispositif de communications mobile et le serveur sont en mesure de communiquer par l'intermédiaire du véhicule en s'adressant à l'autre partie respective à l'aide de l'identifiant commun dédié,
dans lequel les informations comprenant l'identifiant commun dédié comprennent une demande de verrouillage/déverrouillage provenant du dispositif de communications mobile ;
la réception, par l'intermédiaire du véhicule, de la demande de verrouillage/déverrouillage pour verrouiller ou déverrouiller au moins l'un parmi une porte, certaines portes, toutes les portes, un coffre, un capot et un bouchon de réservoir de carburant du véhicule, et la transmission, en réponse à la demande de verrouillage/déverrouillage, d'informations de verrouillage ou de déverrouillage au véhicule ; et
la dissolution du groupe de diffusion ou du groupe de multidiffusion après la fin de l'accès temporel au véhicule et la suppression de l'identifiant commun dédié de la base de données.

2. Procédé (100) selon la revendication 1, dans lequel le procédé (100) comprend en outre :
la réception d'informations sur au moins un autre dispositif de communications mobile ;
l'attribution de l'identifiant commun dédié à l'au moins un autre dispositif de communications mobile ;
la communication de l'identifiant commun dédié à l'au moins un autre dispositif de communications mobile ; et
le fait d'amener le véhicule à relayer des informations comprenant l'identifiant commun dédié entre le serveur et l'au moins un autre dispositif de communications mobile.

3. Procédé (200) permettant de configurer un accès temporel à un véhicule pour un utilisateur, exécutée par le véhicule, le procédé (200) comprenant :
la réception (210) d'un serveur d'un identifiant commun dédié, l'identifiant commun dédié étant utilisé pour adresser un groupe de diffusion ou un groupe de multidiffusion comprenant le véhicule et un dispositif de communication mobile de l'utilisateur et
le relais (220) d'informations comprenant l'identifiant commun dédié entre le serveur et le dispositif de communications mobile de l'utilisateur auquel l'identifiant commun dédié est attribué, de sorte que le dispositif de communications mobile et le serveur sont en mesure de communiquer par l'intermédiaire du véhicule en s'adressant à l'autre partie respective à l'aide de l'identifiant commun dédié,
dans lequel les informations comprenant l'identifiant commun dédié comprennent une demande de verrouillage/déverrouillage, et dans lequel le relais (220) des informations comprend le relais de la demande de verrouillage/déverrouillage du dispositif de communications mobile au serveur pour verrouiller ou déverrouiller le véhicule ;
la réception du serveur d'informations pour le verrouillage ou le déverrouillage du véhicule ; et
le verrouillage ou le déverrouillage d'au moins l'un parmi une porte, certaines portes, toutes les portes, un coffre, un capot et un bouchon de réservoir de carburant du véhicule en fonction des informations pour verrouiller ou déverrouiller le véhicule.

4. Procédé (200) selon la revendication 3, dans lequel le relais (220) des informations comprend :
la connexion de manière communicative à un autre véhicule couplé de manière communicative au serveur ;
le relais d'informations comprenant l'identifiant commun dédié du dispositif de communications mobile au serveur par l'intermédiaire de l'autre véhicule.

5. Procédé (200) selon l'une quelconque des revendications 3 et 4, dans lequel l'identifiant commun dédié est attribué à au moins un autre dispositif de communication mobile, et dans lequel le relais (220) des informations comprend en outre le relais des informations comprenant l'identifiant commun dédié entre l'au moins un autre dispositif de communications mobile et le serveur.

6. Procédé (300) permettant de configurer un accès temporel à un véhicule pour un utilisateur d'un dispositif de communications mobile, exécuté par le dispositif de communications mobile, le procédé (300) comprenant :
la transmission (310) à un serveur d'informations sur le dispositif de communications mobile conjointement avec une demande d'accès temporel au véhicule afin d'attribuer un identifiant commun dédié au dispositif de communications mobile et au véhicule ;
la réception (320) de l'identifiant commun dédié du serveur, l'identifiant commun dédié étant utilisé pour adresser un groupe de diffusion ou un groupe de multidiffusion comprenant le véhicule et le dispositif de communications mobile ; et
le fait d'amener (330) le véhicule à relayer des informations comprenant l'identifiant commun dédié entre le serveur et le dispositif de communications mobile, à l'aide de l'identifiant commun dédié pour s'adresser au serveur,
dans lequel les informations comprenant l'identifiant commun dédié comprennent une demande de verrouillage/déverrouillage, et dans lequel le fait d'amener (330) le véhicule à relayer les informations comprend le fait d'amener le véhicule à relayer la demande de verrouillage/déverrouillage au serveur pour verrouiller ou déverrouiller au moins l'un parmi une porte, certaines portes, toutes les portes, un coffre, un capot et un bouchon de réservoir de carburant du véhicule.

7. Programme d'ordinateur ayant un code de programme pour effectuer l'un des procédés des revendications précédentes, lorsque le programme d'ordinateur est exécuté sur un ordinateur, un processeur, ou un composant matériel programmable.

8. Serveur (402) comprenant :
une ou plusieurs interfaces (412) pour la communication ; et
un circuit de traitement de données (414) configuré pour commander les une ou plusieurs interfaces (412), dans lequel le circuit de traitement de données (414) et les une ou plusieurs interfaces (412) sont configurés pour exécuter l'un des procédés (100) selon les revendications 1 et 2.

9. Circuit de communication (404) pour un véhicule (4100) comprenant :
une ou plusieurs interfaces (412) pour la communication ; et
un circuit de traitement de données (414) configuré pour commander les une ou plusieurs interfaces (412), dans lequel le circuit de traitement de données (414) et les une ou plusieurs interfaces (412) sont configurés pour exécuter l'un des procédés (200) selon les revendications 3 à 5.

10. Véhicule (4100) comprenant le circuit de communication (404) selon la revendication 9.

11. Dispositif de communications mobile (406) comprenant :
une ou plusieurs interfaces (412) pour la communication ; et
un circuit de traitement de données (414) configuré pour commander les une ou plusieurs interfaces (412), dans lequel le circuit de traitement de données (414) et les une ou plusieurs interfaces (412) sont configurés pour exécuter l'un des procédés (300) selon la revendication 6.
